# EUROPEAN PATENT SPECIFICATION

(11) **EP 2 713 089 B1**
(45) Date of publication and mention of the grant of the patent: **01.04.2015**
(21) Application number: 11862847.8
(22) Date of filing: 05.08.2011
(51) Int. Cl.: F16L 25/10, F16L 47/06, F16L 21/08, F16L 27/08, F16L 27/02

(54) **SPIGOT-AND-SOCKET PIPE JOINT WITH ANCHORING STRUCTURE AND INSTALLING METHOD THEREOF**
SPIGOT-UND SOCKEL-ROHRVERBINDUNG MIT VERANKERUNGSSTRUKTUR UND INSTALLATIONSVERFAHREN DAFÜR
RACCORD DE TUYAU EMBOÎTÉ EN TULIPE AVEC STRUCTURE D'ANCRAGE ET SON PROCÉDÉ D'INSTALLATION

(43) Date of publication of application: 02.04.2014
(73) Proprietor: Xinxing Ductile Iron Pipes Co., Ltd, Wuan, Hebei 056300 (CN)
(72) Inventor: ZHANG, Tongbo, Wuan Hebei 056300 (CN); LI, Jun, Wuan Hebei 056300 (CN); LIU, Junfeng, Wuan Hebei 056300 (CN); XU, Jun, Wuan Hebei 056300 (CN); FU, Jian, Wuan Hebei 056300 (CN); YAN, Guodong, Wuan Hebei 056300 (CN); LI, Congfa, Wuan Hebei 056300 (CN); YANG, Chumou, Wuan Hebei 056300 (CN); LI, Jiushi, Wuan Hebei 056300 (CN); LIU, Zhili, Wuan Hebei 056300 (CN); XI, Jie, Wuan Hebei 056300 (CN)
(74) Representative: Gulde & Partner
(86) International application number: PCT/CN2011/078071
(87) International publication number: WO 2013/020258

(56) References cited:
- EP-A1- 1 698 820
- EP-A2- 0 141 276
- WO-A1-00/03171
- CN-A- 102 297 297
- CN-U- 202 182 273
- DE-U1- 20 120 145
- US-A- 1 588 444
- US-A- 3 684 320
- US-A- 4 540 204
- US-A- 4 871 197
- US-A- 5 197 768

## Description

### Field of the Invention

The invention relates to a spigot-and-socket conduit joint with an anchor structure, especially to a spigot-and-socket conduit joint with an anchor structure for a spheroidal graphite cast iron pipe.

### Background of the Invention

A spigot-and-socket conduit joint with an anchor structure has simple structure, convenient installation and broad application in the fields of municipal engineering, oil transferring, gas transferring and the like. The spigot-and-socket conduit joint with the anchor structure which is stopper (or the like) is popular to numerous users. Such joint typically includes a socket and a spigot. A spigot stopper ring is arranged in the spigot. After the spigot is inserted into the socket, a stopper is inserted through a stopper mounting groove. The disengaging of the spigot and the socket is prevented by anchoring the spigot in the socket by means of the stopper. Within this kind of joint, the stopper is the significant guarantee for the reliable connection of the joint. Once the stopper is dropped out, the connectivity of the joint is damaged even causing the spigot to be disengaged from the socket. Accordingly, how to avoid the disengaging of the stopper is a significant technical problem concerned by those skilled in the art.

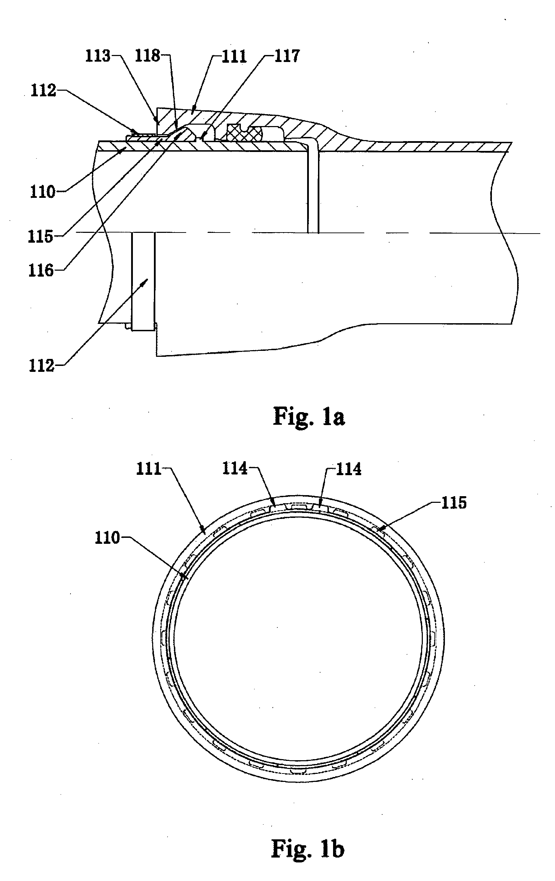

As illustrated in Fig. 1a and Fig. 1b, there is a conventional spigot-and-socket conduit joint, in which an annular wall 113 extending radially inwards is provided at an end of a socket 111, stopper mounting grooves 114 are provided in the annular wall 113, bosses 117 are provided on a spigot 110, anchor elements are stoppers 115 and anti-slip bosses 116 are situated on the stoppers 115. The spigot 110 is inserted into the socket 111. The anti-slip boss 116 on the stopper 115 is installed in alignment with the stopper mounting groove 114 and the stopper 115 is circumferentially rotated at the conduit circumference of the spigot 110. The anti-slip boss 116 on the stopper 115 is located behind the annual wall 113 then the next stopper 115 is installed. After all the stoppers 115 are installed, stoppers 115 are tightly hooped on the outer wall of the spigot 110 by a steel strip 112 or other locking members. When the spigot 110 is subjected to outwards pullout force, the bosses 117 on the spigot 110 act on the left end of the stopper 115 and the anti-slip boss 116 on the stopper 115 act on the axial inner incline 118 of the annual wall 113 of the socket 111, thereby preventing the spigot 110 from slipping. Although this kind of the spigot-and-socket conduit joint has been proved to be successful in practical application, it is necessary to be further improved in practical application. For example, the steps of fixing the stoppers are complicated in that the stoppers are required to be bunched by the steel strip after installed, increasing the installation steps. In the meanwhile, the spigot is moved along the axial direction by external force, causing the steel strip used to fix the stoppers to loose even break due to multiple axial movements; besides, the steel strip and other locking members directly contact with the external environment, the locking members are prone to be corroded and invalidated by the environment influence thereby losing the locking function and causing the stoppers to be dropped out and making the cost of used steel strip higher.

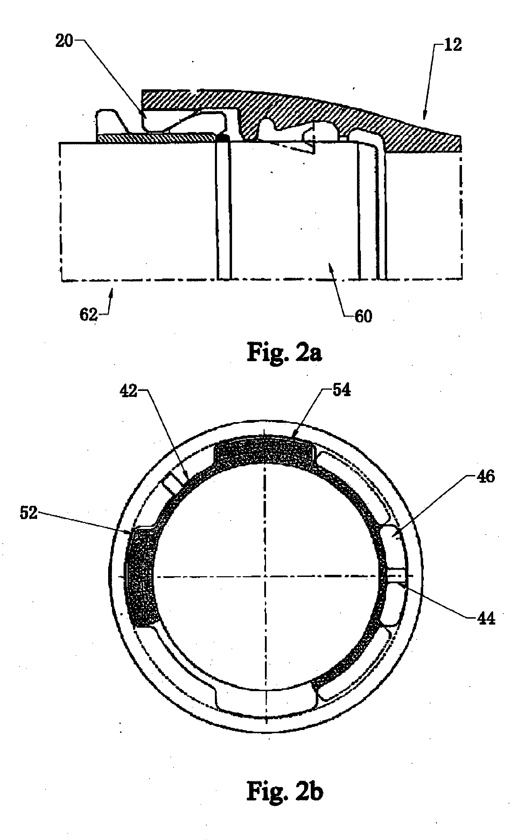

In the patent documentation CN101506567A is disclosed a spigot-and-socket conduit joint with an anchor structure as illustrated in Fig. 2a and Fig. 2b. The joint includes locking elements 42, 44 acted as anchor. An insertion end 60 of the conduit 62 is inserted into a coupling member 12 and the locking elements 42, 44 are installed through 4 grooves of the edge 20 respectively. After the locking elements 42, 44 are rotated to the locking position along the external circumference of the insertion end 60, between two locking parts 52, 54 on the locking element 42, 44 is located a holding element 46 which is supported on the opposite edges 20 such that the locking elements 42, 44 are rotated no more, that is, the locking elements 42, 44 are tightly hooped on the outer wall of the insertion end 60 by the holding element 46. It can be seen that the conduit joint in the document CN101506567A has been further improved compared to the spigot-and-socket conduit joint illustrated in Fig. 1a and Fig. 1b and certain shortcomings of the conduit joint illustrated in Fig. 1a and Fig. 1b have been overcome. However, it is not perfect and there is somewhat to be improved. For example, too much grooves in the edge 20 may lead to reduced mechanical strength of the coupling member 12; a portion of the holding element 46 is exposed to the outside thus it is easily scratched during the installation and the performance thereof is damaged, the service life of the holding element is dramatically reduced because of the long-term exposition and the direct corrosion of the external environment; furthermore the holding element 46 is fixed only by the extrusion force of the opposite edges 20 so that it is unstably fixed and easy to be dropped out.

US 1 588 444 A discloses a pipe joint including a socket, a spigot and several stoppers, in which the socket end is extending inwards radially to form a circular wall, at least one stopper mounting groove is provided in the circular, a spigot stopper ring is provided at the end of the spigot, wherein the said stopper includes an arc panel and at least one group of bosses located on the panel

EP 1 698 820 A1 discloses a pipe joint construction including an elastic seal member for hermetically sealing between an inner circumferential surface of a receiving pipe section and an outer circumferential surface of an inserted pipe section inserted into and connected to the receiving pipe section in a pipe axis direction, and a lock member provided in the inner circumferential surface of the receiving pipe section adjacent a receiving opening thereof for preventing separating movement of the pipe sections by contacting an engaging projection protruding from the outer circumferential surface of the inserted pipe section in the pipe axis direction, wherein the construction further comprises an attachment/detachment control device for attaching and detaching the lock member to/from the receiving pipe section by rotating the lock member about the pipe axis direction relative to the receiving pipe section and by moving, in the pipe axis direction, the lock member placed in a specific position in a passage of rotation.EP 0 141 276 A2 discloses a sleeve connector for connecting the ends of two tubes together, the tubes having a longitudinal axis, comprising: a socket adapted for association with one tube end to be connected, and having an annular recess bounded by a tapered surface tapering radially inwardly toward an end of said socket; a retaining collar adapted to be secured around another tube to be connected adjacent an end of the other tube; at least one locking member disposed in said socket recess and having a radially inner cylindrical contact surface adapted for engagement on the other tube and for engagement against said retaining collar, said locking member having a radially outer curved contact surface having a sectional toroidal shape for contact with said tapered surface, said sectional toroidal shape of said curved contact surface having a cross section with a diameter which is smaller than an axial length of said cylindrical contact surface for said locking member, and with all normal lines that can be drawn through said curved contact surface intersecting said cylindrical contact surface whereby forces exerted by said tapered surface on said curved contact surface are transmitted to said cylindrical contact surface; said tapered surface being conical and extending at an angle to said longitudinal axis so that no part of said locking member comes into contact with said conical surface except for said curved contact surface having said sectional toroidal shape.

### Summary of the Invention

The technical problem to be solved in the invention is to provide an anchor conduit joint with simple structure, easy installation, anti-slip of a stopper and firm and reliable connection.

A spigot-and-socket conduit joint with an anchor structure disclosed in the invention includes a socket, a spigot and several stoppers, in which the end of the socket is extending inwards radially to form an annual wall, at least one stopper mounting groove is provided in the annual wall, a spigot stopper ring is provided at the end of the spigot, wherein the said stopper includes an arc panel and at least one group of bosses located on the panel. The spigot-and-socket conduit joint with an anchor structure is characterized in that, a fixing hole is arranged in the panel, said stopper further includes a rubber block fixedly installed in the fixing hole and the total height h of the rubber block and the panel is equal to or lightly larger than the difference between the inner radius h1 of the socket and the outer radius h2 of the spigot. After the boss of the stopper is aligned with the stopper mounting groove, the stopper can be inserted between the socket and the spigot and rotatably installed in position along the circumference of the spigot, with the rubber block of the stopper between the axial inner incline of the annual wall and the spigot stopper ring.

The rubber block in the above disclosure is fixed to the panel of the stopper through the fixing hole in the stopper, accordingly, the rubber block is reliably fixed and can not be dropped out easily during the installation and long-term usage. The rubber block which is at least subjected to the extrusion of the inner wall of the socket and the axial inner incline of the annual wall is also located behind the annual wall of the end of the socket. After the rubber block is fixed to the stopper, the total height of the rubber block and the stopper is equal to or slight larger than the maximum gap between the socket and the spigot so as to ensure that the rubber block can be subjected to the extrusion of the inner wall of the socket wherever the stopper is located between the socket and the spigot to fasten the stopper in the outer wall of the spigot, thereby the stopper is prevented from displacing or rather dropping out. Moreover, in the use of the conduit, while the spigot is subjected to the axially outward pulling force, the rubber block would be further pressed by the axial force, with increased compression and greater radial force, and further press the stopper against the outer wall of the spigot tightly ensuring the fixation of the stopper, preventing the stopper from dropping out and reliably connecting the socket and the spigot. It is obvious that the stopper can be effectively prevented from dropping out by the rubber block during the installation and long-term usage, ensuring the reliable and stable connection of the socket and the spigot. In addition, the rubber block is positioned behind the axial inner incline of the annual wall of the end of the socket without direct contact with the external environment, so that it could not been scratched during the installation of the conduit and will not been directly corroded by the external environment, thereby extending the service life of the rubber block and consequently extending the service life of the conduit joint.

In the spigot-and-socket conduit joint with the anchor structure according to the invention, a fixing column in form of an inverted cone is provided in the lower part of the said rubber block, the shape of the fixing hole is conformed to the fixing column and the right end wall of the rubber block is alignment with the right end of the panel.

The fixing column in form of the inverted cone is a cone with smaller lower part and larger upper part. It is easy to insert into the fixing hole in the stopper due to the smaller lower part, and it is uneasy to be dropped out after inserted into the fixing hole due to the larger upper part. The lower edge of the right end of the panel of the stopper is contacted with the spigot stopper ring to transmit the force against dropping out. If the spigot stopper ring is contacted with the rubber block, the force against dropping out causes the rubber block to be dropped out of the position. In order to prevent the rubber block from dropping out, the right end wall of the rubber block is aligned with the right end of the panel of the stopper in the invention, avoiding the force against dropping out generated from the spigot stopper ring acting on the rubber block and furthermore dropping out.

In the spigot-and-socket conduit joint with the anchor structure according to the invention, a left and a right inclines are provided on the upper of the rubber block in the axial direction of the joint and one cross groove is provided in the upper middle part of the left incline in the cross direction.

The right incline provided on the upper of the rubber block is mainly to reduce the resistance produced during the insertion of the rubber block through the stopper mounting groove and facilitate the installation. The left incline provided on the upper of the rubber block is mainly to ensure the sufficient contact between a projection of the stopper and the axial inner incline of the annual wall at the end of the socket. When the stopper is installed the rubber block is subjected to the extrusion deformation by which the friction generated on the rubber block is increased, thus the resistance for the installation of the stopper is increased and the installation of the stopper is influenced. Therefore, one cross groove is creatively provided in the upper middle part of the left incline of the rubber block in the cross direction in this invention, leaving a space for the extrusion deformation of the rubber block, reducing the deformation force of the rubber block and facilitating the installation of the stopper.

In the spigot-and-socket conduit joint with the anchor structure according to the invention, the angle between the left incline of the rubber block and the panel of the stopper is identical to the angle β between the left incline of the projection and the panel of the stopper.

In the spigot-and-socket conduit joint with the anchor structure according to the invention, the said boss includes at least two projections and the fixing hole is arranged between the two adjacent projections.

The rubber block can be more firmly fixed by providing the fixing hole between the two bosses, preventing the rubber block from shifting when the stopper is rotated in the circumferential direction of the spigot after inserting between the socket and the spigot.

In the spigot-and-socket conduit joint with the anchor structure according to the invention, an anti-buckling rib is provided at the left edge of the stopper and a notch is provided in the front and rear sides of the stopper at the anti-buckling rib respectively.

The stopper is the structure of an arc plate. During the manufacture, the installation and the application, the left edge of the stopper is tend to be buckled and deformed under the influence of temperature etc. In order to overcome the technical problem, the anti-buckling rib is creatively provided at the left edge in this invention. The stopper is installed manually thus the notches provided in the two sides of the stopper at the anti-buckling rib facilitates the installer to push the stopper by hand and forces the stopper to circumferentially slide along the outer wall of the spigot.

In the spigot-and-socket conduit joint with the anchor structure according to the invention, an arc section projecting outwardly is provided at the lower edge of the right end of the panel of the stopper so as to fit the stopper into the connect position of the spigot stopper ring.

The spigot stopper ring is contacted with the lower edge of the right end of the panel of the stopper to transmit the force against dropping out. The contact portion of the spigot stopper ring and the stopper in prior art is generally an inwardly concave arc section or straight section. The lower edge of the right end of the panel of the stopper is configured to an outwardly convex arc section which matches with the shape of the contact portion of the spigot ring so as to improve the force characteristic of the stopper, reduce the shear force applied to the spigot stopper ring resulting from the axial movement of the conduit and extend the service life of the joint.

In the spigot-and-socket conduit joint with the anchor structure according to the invention, the size of the stopper along the circumference is lightly smaller than the value which is divided the circumference on which the stopper is provided by the number of the stopper, the size of every group of the bosses of the stopper along the circumference is about half of the size of the stopper along the circumference and the bosses are uniformly distributed.

The size of the stopper along the circumference is set to be lightly smaller than the value which is divided the circumference on which the stopper is provided by the number of the stopper, thus at the end of the installation a circumferential space for the last stopper is larger than the size of the stopper along the circumference when the last stopper is installed. Accordingly, the last stopper can be rotated a certain distance on the outer wall of the spigot after installed into the stopper mounting groove, so as to misalign the anti-slip boss with the stopper mounting groove and prevent the last stopper from dropping out. The combined width of every group of bosses of the stopper is about half of the size of the stopper along the circumference and the bosses are uniformly distributed, availing to get uniform stress on the contact portion of the socket and the stopper.

In the spigot-and-socket conduit joint with the anchor structure according to the invention, the horizontal angle β between the left incline of the projection and the panel of the stopper is the sum of horizontal angle θ of the inner incline of the annual wall of the socket and the maximum allowable deflection angle of the spigot, the horizontal angle of the right incline of the projection is less than 90° and larger than the horizontal angle β of the left incline of the projection.

In practical application, the spigot will be deflected from the socket. After the spigot has been deflected from the socket, the contact positions of the anti-slip projections of the two stoppers located at the uppermost and the lowermost positions of the deflection axis will be changed, even result in the contact between them is vanished, that is, they will not contact with each other, affecting the anchor performance of the joint. It has been found in the study, after the angle β between the left incline of the projection and the panel of the stopper is set the sum of the horizontal angle θ of the inner incline of the annual wall of the socket ring and the maximum allowable deflection angle of the spigot, the upside or the underside of the projections of the stoppers at the uppermost and the lowermost positions of the deflection axis will farthest contact with the incline of the cast iron pipe after the conduit is deflected, ensuring the anchor performance of the joint which has been proved by experiments. Furthermore, the fact that the horizontal angle of the right incline of the projection is set to an angle which is less than 90° and larger than the horizontal angle β of the left incline of the projection is to avoid the stopper upsetting when the left incline of the projection of the stopper is subjected to the extrusion force.

An installation method corresponding to the forgoing embodiments of various joint is disclosed in the invention, comprising the following steps: cleaning out a socket of a conduit, mounting a seal ring and applying the lubricant to the seal ring; installing a spigot of another conduit into the socket of the forgoing conduit; preparing stoppers according to various embodiments described above; inserting the stopper into the socket through a stopper mounting groove in the socket of the conduit, rotating and sliding the stopper to the position in the circumference of the spigot then installing the next stopper; installing the last stopper with the boss of the stopper deviating from the position of the mounting groove.

The installation method of the spigot-and-socket conduit joint with the anchor structure in the invention has the following advantages: convenient and rapid installation, better anti-slip capability and good effect.

The spigot-and-socket conduit joint with the anchor structure according to the invention will be further explained in conjunction with the accompanying drawings.

### Brief Description of the Drawings

Fig.1a is a front sectional view of a spigot-and-socket conduit joint in prior art;
Fig. 1b is the left view of Fig. 1a;
Fig. 2a is a front sectional view of a spigot-and-socket conduit joint in prior art (patent document CN101506567A);
Fig.2b is the left view of Fig. 2a;
Fig. 3 is a front sectional view of a spigot-and-socket conduit joint with an anchor structure according to the invention;
Fig. 4 is an axonometric view of the socket of the spigot-and-socket conduit joint with the anchor structure according to the invention;
Fig. 5 is an axonometric view of the stopper according to the invention (without the rubber block);
Fig. 6 is the axonometric view of the stopper according to the invention;
Fig. 7 is an axonometric view of the rubber block according to the invention;
Fig. 8 is a sectional view taken along the line A-A of Fig. 5;
Fig. 9 is a front sectional view of the spigot-and-socket conduit joint with the anchor structure according to the invention (the joint being in deflection state);
Fig. 10 is a schematic force diagram of the stopper according to the invention.

### Detailed Description of the Invention

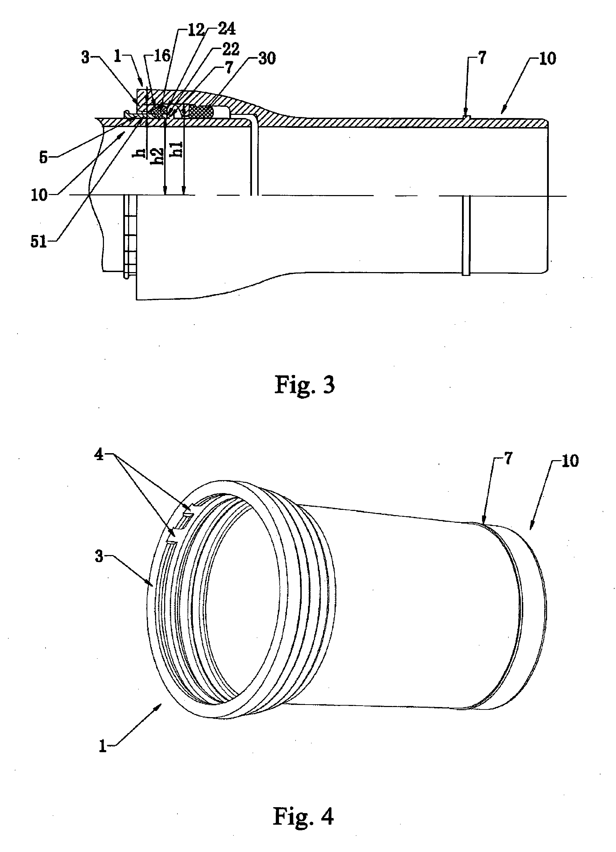

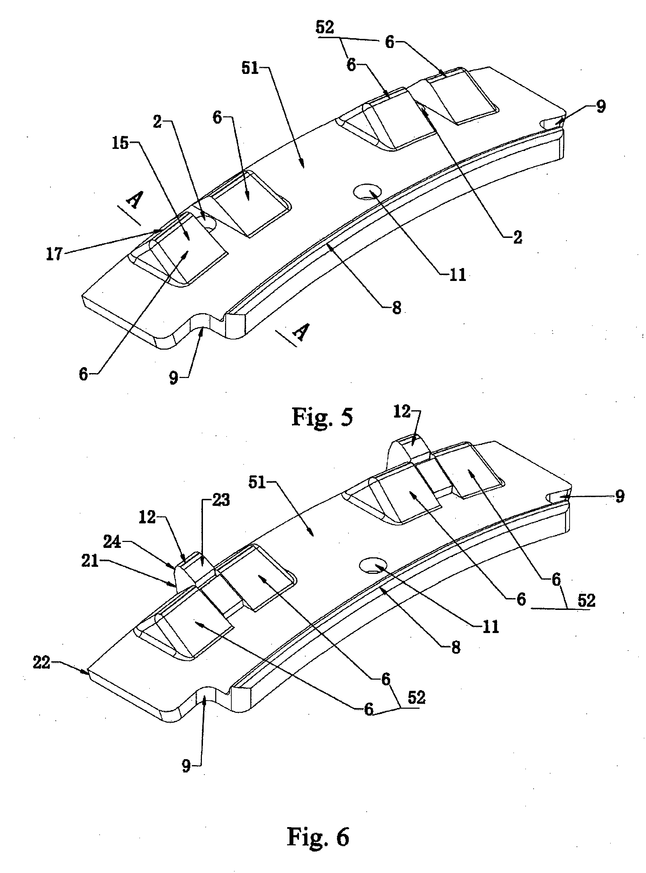

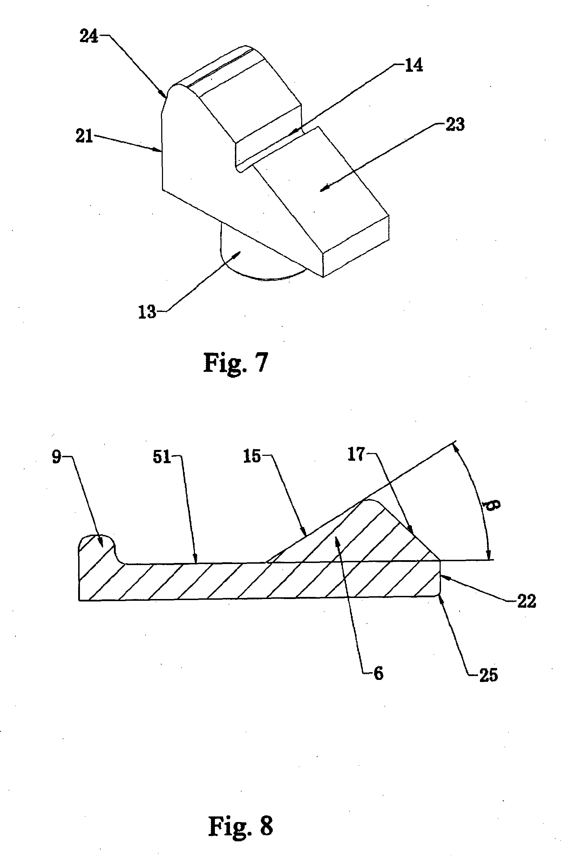

As shown in Fig. 3, one end of a conduit is a socket 1 and correspondingly another end is a spigot, while one end of another conduit is a spigot 10 and correspondingly another end is a socket in the invention. In conjunction with Fig. 4, an annual wall 3 extending radially inwards is provided at the end of the socket 1, two stopper mounting grooves 4 are provided in the annual wall 3, and a spigot stopper ring 7 is provided in the spigot 10. In conjunction with Fig.5 and Fig. 6, the stopper 5 includes an arc panel 51, rubber blocks 12 and two groups of anti-slip bosses 52 arranged on the panel 51. There are two anti-slip projections 6 on each group of bosses 52. A fixing hole 2 is provided in the panel 51 between the two projections 6. An anti-buckling rib 8 is provided at the left edge of the stopper 5 to prevent the left side of the stopper from buckling. A notch 9 is provided in the front and the back side of the stopper 5 at the anti-buckling rib 8 respectively so that the installer could push the stopper 5 during installation and force the stopper 5 to slide circumferentially along the outer wall of the spigot 10. In conjunction with Fig. 8, at the lower edge of the right end of the panel 51 of the stopper is provided an arc section 25 which matches with the spigot stopper ring 7 to improve the force condition of the stopper 5 and reduce the shear force applied to the spigot ring 7. The width of the stopper 5 is unsuitable to be large and should be slightly smaller than the value which is divided the circumference on which the stopper 5 is provided by the number of the stopper 5 and the combined width of all anti-slip projections 6 of the stoppers 5 is about half of the width of the stoppers 5, availing to get uniform stress on the contact portion of the socket 1 and the stopper 5. In order to be convenient to transport and carry out the operations such as painting on the stopper 5, a hanging hole 11 is also provided in the stopper 5. In general, the number of the stoppers 5 should not be too little and should be at least two and there are more than two in this embodiment.

In conjunction with Fig. 7, one fixing column 13 is provided below the rubber block 12, the fixing column 13 can be inserted into the fixing hole 2 so that the rubber block 12 can be fixedly installed to the stopper 5 conveniently. Moreover, the fixing column 13 is form of an inverted cone which could prevent the rubber block 12 from dropping out. After fixation, the right end wall 21 of the rubber block 12 is alignment with the right end 22 of the panel 51 of the stopper. After the stopper 5 is installed in the conduit joint, the stopper 5 is tightly pressed against the outer surface of the spigot 10 by the rubber block 12. One cross groove 14 is provided in the upper middle part of the left incline 23 of the rubber block 12. During the stopper 5 is installed between the socket 1 and the spigot 10, the rubber block 12 can be pressed by the inner surface of the socket 1, making the rubber block 12 deformed. The cross groove 14 leaves a space for the compression deformation of the rubber block 12 to reduce the deformation force of the rubber block 12 and facilitate the installation. Inclines are provided on the left and the right side of the rubber block 12, in which the right incline 24 avails to install the stopper 5 and the left incline 23 matches with the shape of the inner incline 16 of the annual wall 3 at the end of the socket 1. After the rubber block 12 is installed in the panel 51 of the stopper, the pure height of the rubber block 12 and the panel 51 of the stopper is equal to or light larger than the difference between the inner radius h1 of the socket 1 and the outer radius h2 of the spigot 10. In this embodiment, the angle between the left incline 23 and the panel 51 of the stopper is identical to the horizontal angle β between the left incline 15 of the projection and the panel 51 of the stopper.

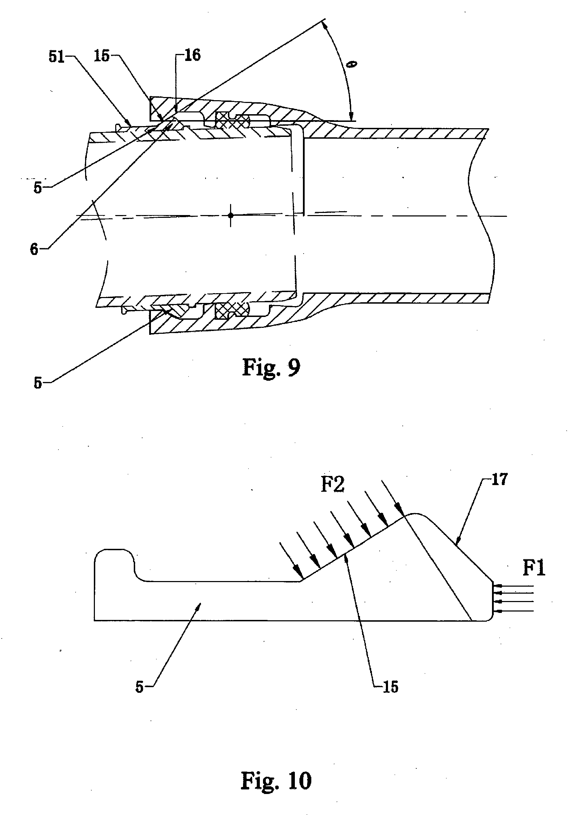

As shown in Fig. 8 and Fig. 9, the angle between the left incline 15 of the anti-slip projection of the stopper 5 and the panel 51 of the stopper is β and the horizontal angle of the inner incline 16 of the annual wall is θ. Generally, the angle β of the left incline 15 of the projection of the stopper 5 is set to the sum of the angle θ of the incline 16 of the annual wall 3 and the maximum allowable deflection angle (that is, the maximum allowable deflection angle of one conduit relative to another conduit which is determined by the type of the conduit joint), which mainly considers that the left inclines of the anti-slip projections 6 of the uppermost and the undermost stopper 5 can better contact with the inner incline 16 after deflection.

Fig. 10 is a schematic force diagram of the stopper 5. It can be seen from Fig. 10 that the force bearing point on the bearing surface where the stopper 5 is subjected to the axial thrust is close to the outer side of the elongation line in the direction of the action force F2 at the force bearing point. Thus, the stopper 5 can be tightly attached to the outer surface of the spigot 10 when the spigot 10 is subjected to the axial force. After the angle β between the left incline 15 of the projection of the stopper 5 is determined, the horizontal angle of the right incline 17 of the projection which is less than 90° and larger than the horizontal angle β of the left incline of the projection can meet the above design requirements.

An installation method of the spigot-and-socket conduit joint comprises the following steps:
Step 1, preparing stoppers 5 and conduits (one end is the socket 1 and another end is the spigot 10);
Step 2, cleaning out the dirt in the socket 1, mounting a seal ring 30 for sealing and applying the lubricant to the seal ring 30, then installing the spigot 10 of another conduit into the processed socket 1 in position for the next step;
Step 3, inserting one stopper 5 into the socket 1 through one stopper mounting groove 4 in the annual wall 3, rotating and sliding the stopper 5 along the outer wall of the spigot 10 after the stopper 5 is in position, then installing the next stopper 5;
Step 4, rotating the last stopper 5 about a quarter of the length of the stopper 5 to the left or the right along the outer wall of the spigot 10 after the last stopper 5 is installed in position, with the anti-slip projection 6 of the stopper 5 away from the position of the mounting groove 4 and preventing the last stopper 5 from dropping out of the mounting groove 4;
Step 5, repeating the above steps and installing the next socket 1 and the next spigot 10 until all conduits are installed.

The conduits in the invention are hard conduit such as spheroidal graphite cast iron pipe, compression plastic pipe and the like.

In the forgoing embodiment, two groups of anti-slip projection are provided on one stopper 5. However, one or more groups of anti-slip projection may also be acceptable as needed in practical application. Accordingly, one or more stopper mounting grooves 4 can be provided at the edge 3 of the socket 1 on condition that the strength of the socket 1 is guaranteed.

In the forgoing embodiment, each boss is provided with two anti-slip projections. However, in practical application it can also be acceptable that one or more anti-slip projections are provided and the rubber block can be located between every two adjacent projections as needed. Consequently, it will be appreciated by those skilled in the art that without departing from the concept of the invention, various changes which all will fall in the scope of the invention could be made to the embodiments described above without inventive efforts.

### Practical Applicability

Disclosed in the invention are the spigot-and-socket conduit joint with the anchor structure and the installation method thereof, in which the rubber block is mounted on the panel of the stopper between the anti-slip projections of each group of the boss by providing two groups of anti-slip projections on the stopper of the conduit joint. After the stopper is inserted between the socket and the spigot through the stopper mounting groove in the annual wall at the end of the socket, the stopper is installed in position by rotating circumferentially along the outer wall of the spigot, where the rubber block is located at the right side of the inner incline of the annual wall at the end of the socket and is used to press the stopper against the outer surface of the spigot, thus enabling to effectively prevent the stopper from displacing or rather dropping out. In the use of the conduit, while the spigot is subjected to the axial outward pulling force, the rubber block would be subjected to the further extrusion of the axial force, increased compression and greater radial force and the rubber block further presses the stopper against the outer wall of the spigot tightly, ensuring the fixation of the stopper, preventing the stopper from being dropped out and reliably connecting the socket and the spigot. It is obvious that the stopper can be effectively prevented from dropping out by the rubber block during the fixation and long-term usage, ensuring the reliable and stable connection of the socket and the spigot. The spigot-and-socket conduit joint with the anchor structure in the invention has simple structure, convenient and rapid installation, better anti-slip capability and wide application thus it has good market prospect and better practical applicability.

## Claims

1. A spigot-and-socket conduit joint with an anchor structure includes a socket (1), a spigot (10) and several stoppers (5), in which the end of the socket (1) is extending inwards radially to form an annual wall (3), at least one stopper mounting groove (4) is provided in the annual wall (3), a spigot stopper ring (7) is provided at the end of the spigot (10), wherein the said stopper (5) includes an arc panel (51) and at least one group of bosses (52) located on the panel (51),
**characterized in that** a fixing hole (2) is arranged in the panel (51), the said stopper (5) further includes a rubber block (12) fixedly installed in the fixing hole (2), and the total height h of the rubber block (12) and the panel (51) is equal to or lightly larger than the difference between the inner radius h1 of the socket (1) and the outer radius h2 of the spigot (10).

2. The spigot-and-socket conduit joint with the anchor structure according to claim 1, wherein a fixing column (13) in form of an inverted cone is provided in the lower part of the said rubber block (12), the shape of the fixing hole (2) is conformed to the fixing column (13) and the right end wall (21) of the rubber block (12) is alignment with the right end (22) of the panel(51).

3. The spigot-and-socket conduit joint with the anchor structure according to claim 2, wherein a left and a right inclines (23,24) are provided on the upper of the rubber block (12) in the axial direction of the joint and one cross groove (14) is provided in the upper middle part of the left incline (23) in the cross direction.

4. The spigot-and-socket conduit joint with the anchor structure according to claim 3, wherein the boss (52) includes at least two projections (6) and the fixing hole (2) is arranged between the two adjacent projections (6).

5. The spigot-and-socket conduit joint with the anchor structure according to claim 4, wherein the angle between the left incline (23) of the rubber block and the panel (51) of the stopper is identical to the angle β between the left incline (15) of the projection of the projection (6) and the panel (51) of the stopper.

6. The spigot-and-socket conduit joint with the anchor structure according to any one of claims 1-5, wherein an anti-buckling rib (8) is provided at the left edge of the stopper (5) and a notch (9) is provided in the front and rear side of the stopper (5) at the anti-buckling rib (8) respectively.

7. The spigot-and-socket conduit joint with the anchor structure according to any one of claims 1-5, wherein an arc section (25) projecting outwardly is provided at the lower edge of the right end (22) of the panel (51) of the stopper so as to fit the stopper (5) into the connect position of the spigot stopper ring (7).

8. The spigot-and-socket conduit joint with the anchor structure according to any one of claims 1-5, wherein the size of the said stopper (5) along the circumference is lightly smaller than the value which is divided the circumference on which the stopper (5) is provided by the number of the stopper (5), the size of every group of the bosses (52) of the stopper (5) along the circumference is about half of the size of the stopper (5) along the circumference and the bosses are uniformly distributed.

9. The spigot-and-socket conduit joint with the anchor structure according to any one of claims 1-5, wherein the horizontal angle β between the left incline (15) of the projection and the panel (51) of the stopper is the sum of horizontal angle θ of the inner incline (16) of the annual wall of the socket (1) and the maximum allowable deflection angle of the spigot (10), and the horizontal angle of the right incline (17) of the projection is less than 90° and larger than the horizontal angle β of the left incline of the projection.

10. An installation method of a spigot-and-socket conduit joint with an anchor structure according with claim 1, the method comprises the following steps:
a. cleaning out a socket of a conduit (1), mounting a seal ring (20) and applying the lubricant to the seal ring (30);
b. installing a spigot (10) of another conduit into the socket (1) of the forgoing conduit;
c. preparing the said stoppers (5) according to one of claims 6-9;
d. inserting the stopper (5) into the socket (1) through a stopper mounting groove (4) in the socket (1) of the cast iron pipe, rotating and sliding the stopper (5) to the position in the circumference of the spigot (10) then installing the next stopper (5);
e. installing the last stopper (5) with the boss (52) of the stopper (5) deviating from the position of the mounting groove (4).

## Patentansprüche

1. Eine Spigot- und Sockel-Rohrverbindung mit einer Verankerungsstruktur weist einen Sockel (1), ein Spitzende (10) und mehrere Anschläge (5) auf, wobei sich das Ende des Sockels (1) radial nach innen erstreckt, um eine ringförmige Wand (3) auszubilden, wobei zumindest eine Anschlags-Befestigungsnut (4) in der ringförmigen Wand (3) bereitgestellt wird, ein Spitzende-Anschlagsring (7) am Ende des Spitzendes (10) bereitgestellt wird, wobei der besagte Anschlag (5) eine Bogenplatte (51) und zumindest eine Gruppe von Buckeln (52), die auf der Platte (51) angeordnet sind, aufweist,
**dadurch gekennzeichnet, dass** ein Befestigungsloch (2) in der Tafel (51) angeordnet ist, der besagte Anschlag (5) ferner einen Gummiblock (12), der im Befestigungsloch (2) fest installiert ist, aufweist, und die Gesamthöhe h des Gummiblocks (12) und der Platte (51) gleich der oder geringfügig größer als die Differenz zwischen dem inneren Radius h1 des Sockels (1) und dem äußeren Radius h2 des Spitzendes (10) ist.

2. Spigot- und Sockel-Rohrverbindung mit der Verankerungsstruktur nach Anspruch 1, wobei eine Befestigungssäule (13) mit der Form eines umgekehrten Kegels im unteren Teil des besagten Gummiblocks (12) bereitgestellt wird, die Form des Befestigungslochs (2) an die Befestigungssäule (13) angepasst ist und die Wand (21) des rechten Endes des Gummiblocks (12) mit dem rechten Ende (22) der Platte (51) fluchtet.

3. Spigot- und Sockel-Rohrverbindung mit der Verankerungsstruktur nach Anspruch 2, wobei eine linke und rechte Schräge (23, 24) auf der Oberseite des Gummiblocks (12) in Achsenrichtung der Verbindung bereitgestellt werden und eine Quernut (14) im oberen Mittelteil der linken Schräge (23) in der Querrichtung bereitgestellt wird.

4. Spigot- und Sockel-Rohrverbindung mit der Verankerungsstruktur nach Anspruch 3, wobei der Buckel (52) zumindest zwei Vorsprünge (6) aufweist und das Befestigungsloch (2) zwischen den zwei benachbarten Vorsprüngen (6) angeordnet ist.

5. Spigot- und Sockel-Rohrverbindung mit der Verankerungsstruktur nach Anspruch 4, wobei der Winkel zwischen der linken Schräge (23) des Gummiblocks und der Platte (51) des Anschlags identisch mit dem Winkel β zwischen der linken Schräge (15) des Vorsprungs des Vorsprungs (6) und der Platte (51) des Anschlags ist.

6. Spigot- und Sockel-Rohrverbindung mit der Verankerungsstruktur nach einem der Ansprüche 1-5, wobei eine Knickschutz-Rippe (8) am linken Rand des Anschlags (5) bereitgestellt wird und eine Kerbe (9) jeweils auf der vorderen und hinteren Seite des Anschlags (5) an der Knickschutz-Rippe (8) bereitgestellt wird.

7. Spigot- und Sockel-Rohrverbindung mit der Verankerungsstruktur nach einem der Ansprüche 1-5, wobei ein Bogenabschnitt (25), der nach außen vorragt, am unteren Rand des rechten Endes (22) der Tafel (51) des Anschlags bereitgestellt wird, um den Anschlag (5) in die Verbindungsposition des Spitzende-Anschlagrings (7) einzusetzen.

8. Spigot- und Sockel-Rohrverbindung mit der Verankerungsstruktur nach einem der Ansprüche 1-5, wobei die Größe des besagten Anschlags (5) entlang des Umfangs geringfügig kleiner als der Wert ist, der der Umfang, auf dem der Anschlag (5) bereitgestellt wird, geteilt durch die Anzahl des Anschlags (5) ist, wobei die Größe jeder Gruppe der Buckel (25) des Anschlags (5) entlang des Umfangs etwa der Hälfte der Größe des Anschlags (5) entlang des Umfangs entspricht und die Buckel gleichmäßig verteilt sind.

9. Spigot- und Sockel-Rohrverbindung mit der Verankerungsstruktur nach einem der Ansprüche 1-5, wobei der Horizontalwinkel β zwischen der linken Schräge (15) des Vorsprungs und der Platte (51) des Anschlags die Summe des Horizontalwinkels θ der inneren Schräge (16) der ringförmigen Wand des Sockels (1) und des maximal zulässigen Auslenkwinkels des Spitzendes (10) ist und der Horizontalwinkel der rechten Schräge (17) des Vorsprungs kleiner als 90° und größer als der Horizontalwinkel β der linken Schräge des Vorsprungs ist.

10. Verfahren zur Installation einer Spigot- und Sockel-Rohrverbindung mit einer Verankerungsstruktur nach Anspruch 1, wobei das Verfahren die folgenden Schritte aufweist:
a. Ausputzen eines Sockels eines Rohrs (1), Befestigen eines Dichtungsrings (20) und Aufbringen des Schmiermittels auf den Dichtungsring (30);
b. Einsetzen eines Spitzendes (10) eines weiteren Rohrs in den Sockel (1) des vorgenannten Rohrs;
c. Herstellen der besagten Anschläge (5) nach einem der Ansprüche 6-9;
d. Einsetzen des Anschlags (5) in den Sockel (1) durch eine Anschlags-Befestigungsnut (4) im Sockel (1) des Gusseisenrohrs, Drehen und Gleiten-Lassen des Anschlags (5) in die Position im Umfang des Spitzendes (10) und anschließend Installieren des nächsten Anschlags (5);
e. Installieren des letzten Anschlags (5), wobei der Buckel (52) des Anschlags (5) von der Position der Befestigungsnut (4) abweicht.

## Revendications

1. Un raccord de tuyau emboîté en tulipe avec une structure d'ancrage comprend un emboîtement (1), un bout (10) mâle et plusieurs organes (5) d'arrêt, dans lequel l'extrémité de l'emboîtement (1) s'étend radialement vers l'intérieur pour former une paroi (3) annulaire, au moins une rainure (4) de montage de l'organe d'arrêt étant prévue dans la paroi (3) annulaire, une bague (7) d'arrêt du bout mâle étant prévue à l'extrémité du bout (10) mâle, dans lequel ledit organe (5) d'arrêt comprend une plaque (51) d'arc et au moins un groupe de bossages (52) placés sur la plaque (51),
**caractérisé en ce qu'**un trou (2) de fixation est disposé dans la plaque (51), que ledit organe (5) d'arrêt comprend en outre un bloc (12) en caoutchouc installé de façon fixe dans le trou (2) de fixation, et que la hauteur totale h du bloc (12) en caoutchouc et de la plaque (51) est égale ou légèrement supérieure à la différence entre le radius intérieur h1 de l'emboîtement (1) et le rayon extérieur h2 du bout (10) mâle.

2. Raccord de tuyau emboîté en tulipe avec la structure d'ancrage selon la revendication 1, dans lequel une colonne (13) de fixation en forme d'un cône renversé est prévue dans la partie inférieure dudit bloc (12) en caoutchouc, la forme du trou (2) de fixation étant conformée à la colonne (13) de fixation et la paroi (21) de l'extrémité droite du bloc (12) en caoutchouc étant alignée avec l'extrémité (22) droite de la plaque (51).

3. Raccord de tuyau emboîté en tulipe avec la structure d'ancrage selon la revendication 2, dans lequel une pente (23, 24) gauche et droite sont prévues sur le haut du bloc (12) en caoutchouc dans la direction axiale du raccord, et une rainure (14) transversale étant prévue dans la partie centrale supérieure de la pente (23) gauche dans la direction transversale.

4. Raccord de tuyau emboîté en tulipe avec la structure d'ancrage selon la revendication 3, dans lequel le bossage (52) comprend au moins deux saillies (6) et le trou (2) de fixation est disposé entre les deux saillies (6) adjacentes.

5. Raccord de tuyau emboîté en tulipe avec la structure d'ancrage selon la revendication 4, dans lequel l'angle entre la pente (23) gauche du bloc en caoutchouc et la plaque (51) de l'organe d'arrêt est identique à l'angle β entre la pente (15) gauche de la saillie de la saillie (6) et la plaque (51) de l'organe d'arrêt.

6. Raccord de tuyau emboîté en tulipe avec la structure d'ancrage selon l'une des revendications 1-5, dans lequel un renfort (8) anti-flambage est prévu au bord gauche de l'organe (5) d'arrêt et une encoche (9) est respectivement prévue dans les côtés avant et arrière de l'organe (5) d'arrêt au renfort (8) anti-flambage.

7. Raccord de tuyau emboîté en tulipe avec la structure d'ancrage selon l'une des revendications 1-5, dans lequel une section (25) d'arc faisant saillie vers l'extérieur est prévue au bord inférieur de l'extrémité (22) droite de la plaque (51) de l'organe d'arrêt de manière à insérer l'organe (5) d'arrêt dans la position de connexion de la bague (7) d'arrêt du bout mâle.

8. Raccord de tuyau emboîté en tulipe avec la structure d'ancrage selon l'une des revendications 1-5, dans lequel la taille dudit organe (5) d'arrêt le long de la circonférence est légèrement inférieur à la valeur qui est la circonférence sur laquelle est prévu l'organe (5) d'arrêt divisée par le nombre de l'organe (5) d'arrêt, la taille de chaque groupe des bossages (52) de l'organe (5) d'arrêt le long de la circonférence étant environ la moitié de la taille de l'organe (5) d'arrêt le long de la circonférence, et les bossages étant répartis uniformément.

9. Raccord de tuyau emboîté en tulipe avec la structure d'ancrage selon l'une des revendications 1-5, dans lequel l'angle horizontal β entre la pente (15) gauche de la saillie et la plaque (51) de l'organe d'arrêt est la somme de l'angle horizontal θ de la pente (16) intérieure de la paroi annulaire de l'emboîtement (1) et l'angle de déviation maximal admissible du bout (10) mâle, et l'angle horizontal de la pente (17) droite de la saillie étant inférieur à 90° et supérieur à l'angle horizontal β de la pente gauche de la saillie.

10. Procédé d'installation d'un raccord de tuyau emboîté en tulipe avec une structure d'ancrage selon la revendication 1, le procédé comprenant les étapes suivantes :
a. nettoyer un emboîtement d'un tuyau (1), monter une bague (20) d'étanchéité et appliquer le lubrifiant sur la bague (30) d'étanchéité ;
b. insérer un bout (10) mâle d'un autre tuyau dans l'emboîtement (1) du tuyau précédent ;
c. préparer lesdits organes (5) d'arrêt selon l'une des revendications 6-9 ;
d. insérer l'organe (5) d'arrêt dans l'emboîtement (1) par une rainure (4) de montage de l'organe d'arrêt dans l'emboîtement (1) du tuyau en fonte, tourner et faire glisser l'organe (5) d'arrêt dans la position dans la circonférence du bout (10) mâle, et ensuite installer l'organe (5) d'arrêt suivant ;
e. installer le dernier organe (5) d'arrêt de sorte que le bossage (52) de l'organe (5) d'arrêt dévie de la position de la rainure (4) de montage.
